# EUROPÄISCHE PATENTSCHRIFT

(11) **EP 3 554 001 B1**
(45) Veröffentlichungstag und Bekanntmachung des Hinweises auf die Patenterteilung: **24.11.2021**
(21) Anmeldenummer: 18166847.6
(22) Anmeldetag: 11.04.2018
(51) Int. Cl.: H04L 9/32

(54) **VERFAHREN ZUM ABGESICHERTEN ÜBERTRAGEN UND VERFAHREN ZUM ABGESICHERTEN BIDIREKTIONALEN AUSTAUSCHEN VON ELEKTRONISCHEN DATENPAKETEN IN EINEM NETZWERK**
METHOD FOR SECURED TRANSMISSION AND METHOD FOR SECURED BIDIRECTIONAL EXCHANGE OF ELECTRONIC DATA PACKETS IN A NETWORK
PROCÉDÉ DE TRANSFERT SÉCURISÉ ET PROCÉDÉ D'ÉCHANGE BIDIRECTIONNEL SÉCURISÉ DES PAQUETS DE DONNÉES ÉLECTRONIQUES DANS UN RÉSEAU

(43) Veröffentlichungstag der Anmeldung: 16.10.2019
(73) Patentinhaber: ubirch GmbH, 50670 Köln (DE)
(72) Erfinder: MERZ, Michael, 10317 Berlin (DE); JUGEL, Matthias, 12435 Berlin (DE)
(74) Vertreter: Bittner, Thomas L.

(56) Entgegenhaltungen:
- DE-A1- 10 234 815
- DE-A1-102015 202 935
- DE-U1-202012 101 671
- US-A1- 2003 182 552
- US-A1- 2004 006 692
- US-A1- 2013 166 917

## Beschreibung

Die Erfindung betrifft ein Verfahren zum abgesicherten Übertragen von elektronischen Datenpaketen in einem Netzwerk sowie ein Verfahren zum abgesicherten bidirektionalen Austausch von elektronischen Datenpaketen in einem Netzwerk.

### Hintergrund

Zur Absicherung des Übertragens von elektronischen Datenpaketen zwischen Netzwerckomponenten, die jeweils über einen oder mehrere Prozessoren und wahlweise einen zugeordneten Speicher für elektronischen Daten aufweisen, in einem Netzwerk ist es bekannt, verschlüsselte Datenübertragungsprotokolle zu verwenden. Ergänzend kann eine Authentifizierung der an der Datenübertragung beteiligten Netzwerkkomponenten mittels Zertifikaten vorgesehen sein. Hierdurch wird sichergestellt, dass die Datenübertragung von der sendenden Netzwerkkomponente an die empfangende Netzwerkkomponente vertrauenswürdig und abgesichert ist. Die weitere Datenübertragung der empfangenen elektronischen Datenpakete durch die empfangende Netzwerkkomponente zu einer anderen Netzwerkkomponente kann dann in gleicher Weise erfolgen.

Bekannt ist es auch, für die Übertragung von Datenpaketen kryptographische Schlüssel zu verwenden. Beispielsweise werden kryptographische Schlüsselpaare für Netzwerkkomponenten bereitgestellt, die jeweils einen öffentlichen und einen privaten Schlüssel umfassen. Auf diese Weise ist die Authentisierung von elektronischen Datenpaketen ermöglicht, die zwischen Netzwerkkomponenten ausgetauscht werden. Üblicherweise wird hierbei in der sendenden Netzwerkkomponente das zu übertragende elektronische Datenpaket mittels des privaten Schlüssels der sendenden Netzwerkkomponente digital signiert. Sodann werden das unverschlüsselte elektronische Datenpaket und die digitale Signatur an die empfangende Netzwerkkomponente übermittelt. Diese hat zuvor den öffentlichen Schlüssel der sendenden Netzwerkkomponente erhalten und kann hiermit das (digital signierte) elektronische Datenpaket verifizieren. Beim Verifizieren, was als solches bekannt ist, wird unter Verwendung des öffentlichen Schlüssels überprüft, ob die erhaltene digitale Signatur vom Sender (sendende Netzwerkkomponente) des Datenpakets stammt und zu dem empfangenen Datenpaket passt.

Der Stand der Technik kann für die Datenübertragung nur eine transitive Vertrauenswürdigkeit herstellen, bei der sich von der sendenden Netzwerkkomponente bis zur endgültigen empfangenden Netzwerkkomponente alle beteiligten Netzwerkkomponenten vertrauen müssen. Des Weiteren ist eine Manipulation auf den zwischengelagerten datenverarbeitenden und transportierenden Netzwerkkomponenten möglich und kann nicht vom Empfänger erkannt werden, ohne eine komplette Prüfung der gesamten Übertragungsstrecke durchzuführen. Ein vertrauenswürdiger Datentransfer über unverschlüsselte Wege ist ausgeschlossen.

Eine große Schwäche der bekannten Verfahren (Verschlüsselung auf dem Transportweg) ist, dass die Daten für eine Verarbeitung / Analyse auf der empfangenden Netzwerkkomponente entschlüsselt vorliegen müssen. Ab der Entschlüsselung sind sie quasi schutzlos. Was besonders schwerwiegend ist, weil es genügt, einen Server zu hacken, um die Vertrauenswürdigkeit für alle nachfolgenden Verarbeitungsschritte / Systeme in Frage zu stellen.

Dokument US 2003 / 0182552 A1 offenbart ein Verfahren zur Handhabung einer digitalen Signatur für einen Datenaustausch zwischen Netzwerkkomponenten.

Dokument DE 10 2015 202 935 A1 betrifft ein Verfahren und eine Vorrichtung zum Manipulationsschutz, wobei das Verfahren Folgendes umfasst: Signieren einer Verknüpfung eines ersten Hashwertes mit dem ersten zeitvarianten Parameter und einer Identifikation des zweiten Geräts mittels eines dem zweiten Gerät zugeordneten privaten Schlüssel eines asymmetrischen Verschlüsselungsverfahrens, wobei zur Bestimmung des Hashwerts auf dem zweiten Gerät gespeicherte, zur Ausführung im Betrieb des zweiten Geräts vorgesehene Programmanweisungen oder Daten herangezogen werden; Erzeugen eines zweiten Datenpakets umfassend die Signatur und die Verknüpfung; Senden des zweiten Datenpakets vom zweiten Gerät an das erste Gerät.

Dokument US 2013 / 0166 917 A1 betrifft ein Verfahren zum Verifizieren des Eincheckens eines Nutzers für eine Veranstaltung.

Dokument DE 102 34 815 A1 bezieht sich auf ein Verfahren zum digitalen Signieren digitaler Informationen. Hierbei werden die Informationen in einem ersten Datensatz abgelegt, und durch digitales Signieren dieses Datensatzes wird eine erste Signatur erzeugt. In einem zweiten Datensatz werden Informationen über die erste Signatur und / oder eine noch zu erzeugende zweite Signatur bereitgestellt. Die Informationen dieses Datensatzes werden mit denen des ersten Datensatzes und / oder der ersten Signatur kombiniert und durch digitales Signieren der so erhaltenen Datenkombination wird die zweite Signatur generiert. Mit dem Verfahren wird ein digitaler Stempel erzeugt.

Dokument US 2004 / 006692 A1 betrifft die Nutzung von sogenannten Lock-Listen von Kettensignaturen zur Absicherung der Gültigkeit eines Originals.

### Zusammenfassung

Aufgabe der Erfindung ist es, verbesserte Verfahren zum abgesicherten Übertragen und Austauschen von elektronischen Datenpaketen zwischen Netzwerkkomponenten eines Netzwerks zu schaffen, welches für das Senden und Empfangen von elektronischen Datenpaketen durch Netzwerkkomponenten eingerichtet ist.

Zur Lösung ist ein Verfahren zum abgesicherten Übertragen von Datenpaketen nach dem unabhängigen Anspruch 1 geschaffen. Weiterhin ist ein Verfahren zum abgesicherten bidirektionalen Austauschen von elektronischen Datenpaketen in einem Netzwerk nach dem unabhängigen Anspruch 4 geschaffen. Ausgestaltungen sind Gegenstand der abhängigen Ansprüche.

Bei den vorgeschlagenen Technologien ist insbesondere vorgesehen, beim aufeinanderfolgenden übertragen von eiektronischen Datenpaketen die digitale Signatur für ein übertragenes elektronisches Datenpaket bei einer folgenden Übertragung eines weiteren elektronischen Datenpaketes einzubeziehen. die vorgeschlagenen Verfahren sichern die Übertragung der elektronischen Datenpakete gegen eine Manipulation ab.

Bei dem Verfahren zum abgesicherten Übertragen von elektronischen Datenpaketen kann in der ersten Netzwerkkomponente im Rahmen eines n-ten (n > 2) Datenbearbeitungsvorgang weiterhin Folgendes vorgesehen sein: Bereitstellen n-ter Nutzdaten, die zumindest von den ersten und den zweiten Nutzdaten verschieden sind; Erzeugen eines n-ten elektronischen Datenpakets, welches die erste Komponenten-ID, die n-ten Nutzdaten und eine (n-1)-te digitale Signatur umfasst, welche unter Verwendung des ersten privaten Schlüssels für ein (n-1)-tes Datenpaket mit (n-1)-ten Nutzdaten, der ersten Komponenten-ID und einer (n-2)-ten digitalen Signatur erzeugt wurde; Erzeugen einer n-ten digitalen Signatur, indem das n-te elektronische Datenpaket mit dem ersten privaten Schlüssel digital signiert wird; und Senden des n-ten elektronischen Datenpakets und der n-ten digitalen Signatur von der ersten Netzwerckomponente an die zweite Netzwerkkomponente. in der zweiten Netzwerkkomponente werden das n-te elektronische Datenpaket sowie die n-te digitale Signatur empfangen und in der Speichereinrichtung gespeichert.

Bei dem Verfahren kann in der zweiten Netzwerkkomponente weiterhin Folgendes vorgesehen sein: Verifizieren des ersten elektronischen Datenpakets mittels des ersten öffentlichen Schlüssels; Verifizieren des zweiten elektronischen Datenpakets mittels des ersten öffentlichen Schlüssel. Weiterhin kann ein Auswerten des ersten und des zweiten verifizierten elektronischen Datenpakets vorgesehen sein, wobei hierbei wenigstens eine der folgenden Prüfaufgaben ausgeführt wird: Prüfen, ob das erste und das zweite elektronische Datenpaket von der derselben Netzwerkkomponente empfangen wurden, nämlich der ersten Netzwerckomponente; Prüfen, ob das erste und das zweite elektronische Datenpaket unverändert von der ersten an die zweite Netzwerkkomponente übertragen wurden; und Prüfen, ob das erste und das zweite elektronische Datenpaket in der von der ersten Netzwerkkomponente festgelegten Reihenfolge empfangen wurden, also das erste vor dem zweiten elektronischen Datenpaket.

Bei dem Verfahren zum abgesicherten Übertragen von elektronischen Datenkomponenten, kann in der zweiten Netzwerkkomponente vorgesehen sein, das n-te elektronische Datenpaket mittels des ersten öffentlichen Schlüssels zu verifizieren und das n-te verifizierte elektronische Datenpaket auszuwerten, wobei hierbei wenigstens eine der folgenden Prüfaufgaben ausgeführt wird: Prüfen, ob das n-te elektronische Datenpaket von der ersten Netzwerkkomponente empfangen wurde; Prüfen, ob das n-te elektronische Datenpaket unverändert von der ersten an die zweite Netzwerkkomponente übertragen wurde; und Prüfen, ob das n-te elektronische Datenpaket in der von der ersten Netzwerkkomponente festgelegten Reihenfolge empfangen wurde, also das (n-1)-te vor dem n-ten elektronischen Datenpaket.

Bei dem Verfahren zum abgesicherten bidirektionalen Austauschen von elektronischen Datenpaketen in dem Netzwerk kann in der zweiten Netzwerkkomponente weiterhin Folgendes vorgesehen sein: Empfangen des zweiten elektronischen Anfrage-Datenpakets und der zweiten digitalen Anfrage-Signatur; Speichern wenigstens der zweiten digitalen Anfrage-Signatur in der zweiten Speichereinrichtung; Bereitstellen zweiter Antwort-Nutzdaten als Reaktion auf das Empfangen des zweiten elektronischen Anfrage-Datenpakets, wobei die zweiten Antwort-Nutzdaten eine zweite Antwort auf die zweite Anfrage betreffen; Erzeugen eines zweiten elektronischen Antwort-Datenpakets, welches die zweite Komponenten-ID, die zweiten Antwort-Nutzdaten und die zweite elektronische Anfrage-Signatur umfasst; Erzeugen einer zweiten digitalen Antwort-Signatur, indem das zweite elektronische Antwort-Datenpaket mit dem zweiten privaten Schlüssel digital signiert wird; Senden des zweiten elektronischen Antwort-Datenpakets und der zweiten digitalen Antwort-Signatur von der zweiten Netzwerckomponente an die erste Netzwerkkomponente. In der ersten Netzwerkkomponente werden das zweite elektronische Antwort-Datenpaket und die zweite digitale Antwort-Signatur empfangen, und wenigstens die zweite digitale Antwort-Signatur wird in der ersten Speichereinrichtung gespeichert. Ergänzend kann auch das zweite elektronische Antwort-Datenpaket in der Speichereinrichtung gespeichert werden.

Bei dem Verfahren zum abgesicherten bidirektionalen Austauschen von elektronischen Datenpaketen kann in der zweiten Netzwerkkomponente Folgendes vorgesehen sein: Bereitstellen weiterer Antwort-Nutzdaten, die eine weitere Antwort auf die erst Anfrage anzeigen; Erzeugen eines weiteren elektronischen Antwort-Datenpakets, welches die zweite Komponenten-ID, die weiteren Antwort-Nutzdaten und die erste elektronische Antwort-Signatur umfasst; Erzeugen einer weiteren digitalen Antwort-Signatur, indem das weitere elektronische Antwort-Datenpaket mit dem zweiten privaten Schlüssel digital signiert wird; Senden des weiteren elektronischen Antwort-Datenpakets und der weiteren digitalen Antwort-Signatur von der zweiten Netzwerkkomponente an die erste Netzwerkkomponente. In der ersten Netzwerkkomponente werden das weitere elektronische Antwort-Datenpaket und die weitere digitale Antwort-Signatur empfangen und wenigstens die weitere digitale Antwort-Signatur in der ersten Speichereinrichtung gespeichert.

Es kann vorgesehen sein, dass das weitere elektronische Antwort-Datenpaket und die weitere digitalen Antwort-Signatur in der zweiten Netzwerkkomponente erzeugt und an die erste Netzwerkkomponente übertragen werden bevor in der zweiten Netzwerkkomponente das zweite elektronische Antwort-Datenpaket und die zweite digitale Antwort-Signatur erzeugt werden.

In dem Netzwerk können die Datenpakete und / oder die die Signaturen betreffenden Daten zwischen einer sendenden und einer empfangenden Netzwerkkomponente auf gleichen oder verschiedenen Übertragungswegen innerhalb des Netzwerkes übertragen werden. Dies ermöglicht es beispielweise, Datenpakete und Signaturen auf verschiedenen und wenigstens teilweise getrennten Übertragungswegen von der sendendenden zu der empfangenden Netzwerkkomponente zu übermitteln, sei es zeitgleich oder zeitversetzt. Das Verifizieren unter Verwendung der digitalen Signatur umfasst sowohl eine Verifizierung des Senders (Authentizitätsprüfung) wie auch die Prüfung auf Unversehrtheit der Datenpakete (Integritätsprüfung).

### Beschreibung von Ausführunqsbeispielen

Im Folgenden werden weitere Ausführungsbeispiele unter Bezugnahme auf Figuren einer Zeichnung erläutert. Hierbei zeigen:
- Fig. 1: eine schematische Darstellung eines Netzwerkes mit Netzwerkkomponenten, zwischen denen über Datenkommunikationsverbindungen elektronische Datenpakete übertragen werden können;
- Fig. 2a bis 2c: eine schematische Darstellung für ein Verfahren zum abgesicherten Übertragen von elektronischen Datenpaketen in dem Netzwerk und
- Fig. 3a bis 3e: eine schematische Darstellung für ein Verfahren zum bidirektionalen Austauschen von elektronischen Datenpaketen in dem Netzwerk.

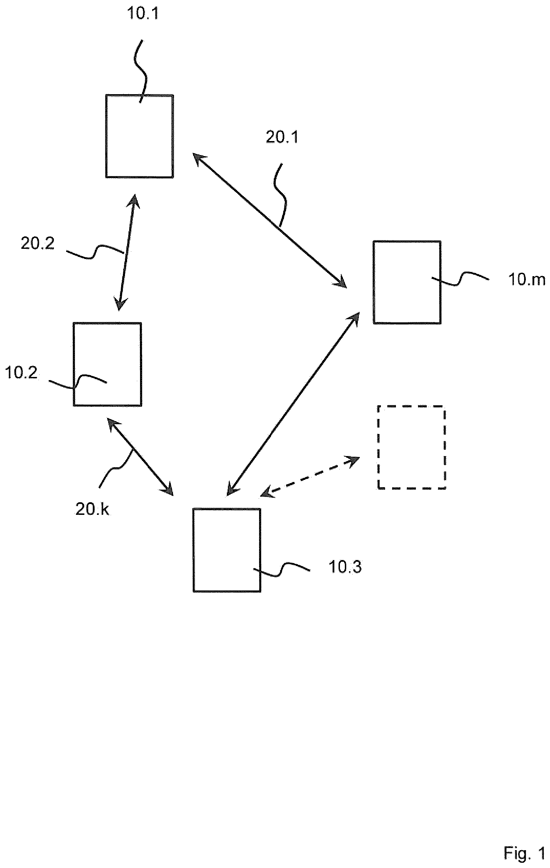

Fig. 1 zeigt eine schematische Darstellung einer Anordnung mit Netzwerkkomponenten 10.1, ...,10.m (m > 2), die in einem Netzwerk angeordnet und über Datenkommunikationsverbindungen 20.1, ..., 20.k (k > 2) elektronische Datenpakete austauschen können. Die Netzwerkkomponenten 10.1,...10.m verfügen über jeweils mindestens einen Prozessor, der eingerichtet ist, elektronische Daten zu verarbeiten, zum Beispiel elektronische Datenpakete zu erzeugen und für eine Übertragung bereitzustellen oder empfangene elektronische Datenpakete auszuwerten.

Die Datenkommunikationsverbindungen 30.1, ..., 30.k können langfristig der kurzfristig zwischen Netzwerkkomponenten ausgebildet sein, beispielsweise beschränkt auf einzelnen Übertragungsvorgang für ein elektronisches Datenpaket.

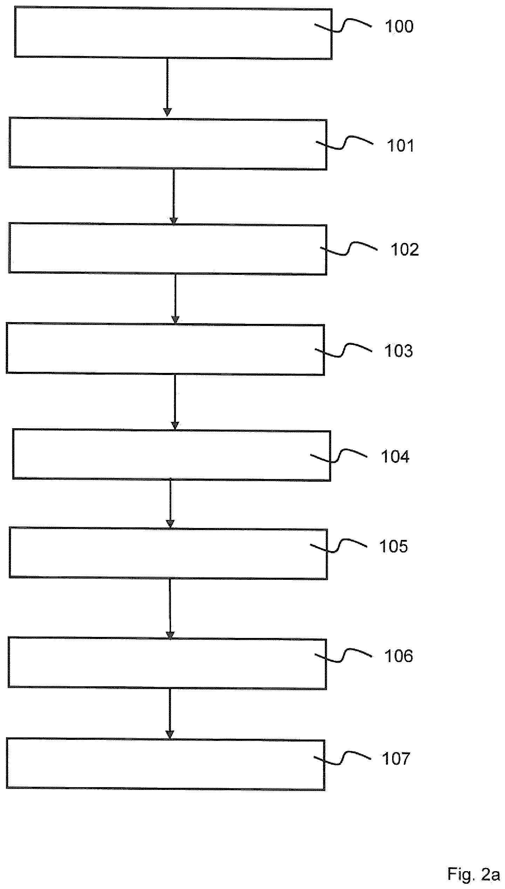

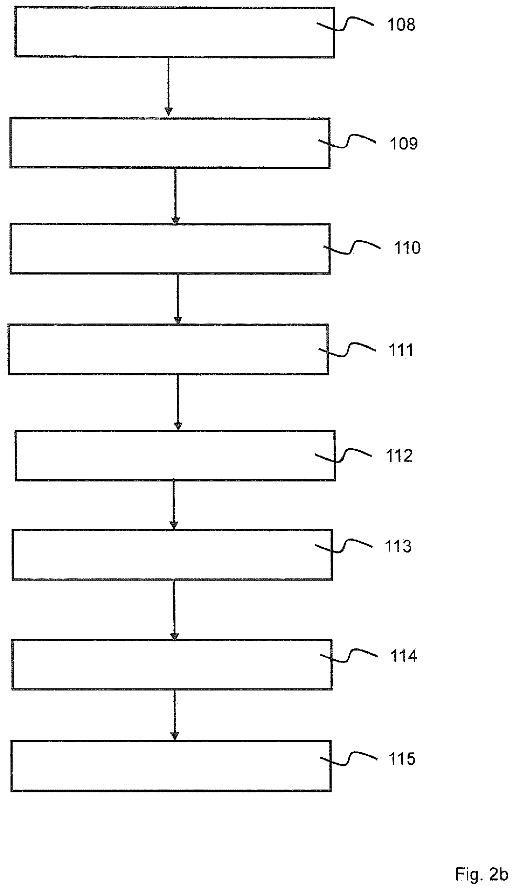

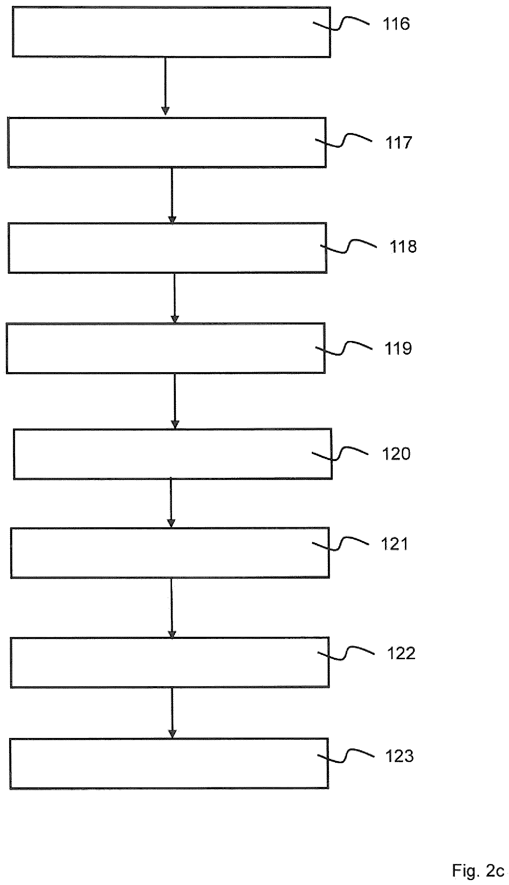

Fig. 2 zeigt eine schematische Darstellung für ein Verfahren zum abgesicherten Übertragen von elektronischen Datenpaketen zwischen zwei der Netzwerkkomponenten 10.1, ...,10.n, nämlich beispielhaft zwischen einer ersten Netzwerkkomponente 10.1 und einer zweiten Netzwerkkomponente 10.2.

Nachfolgend werden zunächst Schritte im Rahmen eines ersten Datenverarbeitungsvorgangs in der ersten Netzwerkkomponente 10.1 beschrieben. Es wird ein erstes kryptographisches Schlüsselpaar zum digitalen Signieren mit einem ersten öffentliche und einem ersten privaten Schlüssel im Schritt 100 bereitgestellt. In Schritt 101 wird eine erste Komponenten-ID (ID - Identifikation) bereitgestellt, die die erste Netzwerkkomponente 10.1 in dem Netzwerk eineindeutig identifiziert. Erste Nutzerdaten werden im Schritt 102 bereitgestellt. Es wird ein erstes elektronisches Datenpaket erzeugt (Schritt 103) welches die erste Komponenten-ID und die ersten Nutzdaten umfasst. Die Nutzdaten können beliebige Dateninhalte betreffen, beispielsweise Messdaten, Audio- und / oder Videodatum. Im Schritt 104 wird eine erste digitale Signatur erzeugt, indem das erste elektronische Datenpaket mit dem ersten privaten Schlüssel digital signiert wird. Das erste elektronische Datenpakete und die erste digitale Signatur werden im Schritt 105 von der ersten Netzwerkkomponente 10.1 an die zweite Netzwerkkomponente 10.2 übersandt. Weiterhin wird im Schritt 106 der erste öffentliche Schlüssel von der ersten an die zweite Netzwerkkomponente 10.1, 10.2, übersandt, wobei das Übermitteln des öffentlichen Schlüssels vorher ausgeführt werden kann, sobald das erste kryptographische Schlüsselpaar in der ersten Netzwerkkomponente bereitgestellt ist.

Im Folgenden werden weitere Schritte im Rahmen eines zweiten Datenverarbeitungsvorgangs in der ersten Netzwerkkomponente 10.1 beschrieben. Im Schritt 107 werden zweite Nutzdaten bereitgestellt, die von den ersten Nutzdaten verschieden sind. Es wird ein zweites elektronisches Datenpaket erzeugt (Schritt 108) welches die erste Komponente-ID, die zweiten Nutzdaten und die erste digitale Signatur umfasst. Im Schritt 109 wird eine zweite digitale Signatur erzeugt, indem das zweite elektronische Datenpaket mit dem ersten privaten Schlüssel digital signiert wird. Das zweite elektronische Datenpaket und die zweite digitale Signatur werden von der ersten Netzwerkkomponente 10.1 an die zweite Netzwerkkomponente 10.2 gesendet (Schritt 110).

In der zweiten Netzwerkkomponente 10.2 ist bei dem Verfahren Folgendes vorgesehen: Empfange des ersten elektronischen Datenpakets und der ersten digitalen Signatur, sowie des zweiten elektronischen Datenpakets und der zweiten digitalen Signatur (schritt 111), was zeitgleich oder zeitversetzt erfolgen kann. Das erste und das zweite elektronische Datenpaket sowie die erste und die zweite digitale Signatur werden in einer Speichereinrichtung gespeichert (Schritt 112), die der zweiten Netzwerkkomponente zugeordnet ist. Der erste öffentliche Schlüssel wird in der zweiten Netzwerkkomponente empfangen (Schritt 113) und in der Speichereinrichtung gespeichert (Schritt 114).

Bei dem Verfahre zum abgesicherten Übertragen von elektronischen Datenpaketen kann dann weiterhin ein n-ter (n > 2) Datenverarbeitungsvorgang in der ersten Netzwerkkomponente 10.1 vorgesehen sein. Dieses kann die folgenden Schritte umfassen: Bereitstellen n-ter Nutzdaten, die zumindest von den ersten und den zweiten Nutzdaten verschieden sind (Schritt 115); Erzeugen eines n-ten elektronischen Datenpakets, welches die erste Komponenten-ID, die n-ten Nutzdaten und eine (n-1)-te digitale Signatur umfasst, welche unter Verwendung des ersten privaten Schlüssels für ein (n-1)-tes Datenpaket mit (n-1)-ten Nutzdaten, der ersten Komponenten-ID und einer (n-2)-ten digitalen Signatur erzeugt wurde (Schritt 116); Erzeugen einer n-ten digitalen Signatur, indem das n-te elektronische Datenpaket mit dem ersten privaten Schlüssel digital signiert wird (Schritt 117); und Senden des n-ten elektronischen Datenpakets und der n-ten digitalen Signatur von der ersten Netzwerckomponente an die zweite Netzwerkkomponente (Schritt 118).

In der zweiten Netzwerkkomponente werden das n-te elektronische Datenpakete sowie die n-te digitale Signatur empfangen und in der Speichereinrichtung gespeichert (Schritte 119, 120).

In der zweiten Netzwerkkomponente 10.2 können dann eine oder mehrere Prüfaufgaben durchgeführt werden, um die korrekte und manipulationsfreie Übertragung der elektronischen Datenpakete zu prüfen. Hierbei kann vorgesehen sein, zunächst im Schritt 121 unter Verwendung des ersten elektronischen Schlüssels das erste elektronische Datenpaket zu überprüfen (verifizieren), dahingehend, ob die übermittelte digitale Signatur des ersten elektronischen Datenpakets zum Inhalt des ersten elektronischen Datenpakets passt. Im Schritt 122 wird ein solches Verifizieren für das zweite elektronische Datenpaket mittels des ersten öffentlichen Schlüssels ausgeführt. Hierbei findet für die empfangenen Datenpakete nicht nur eine Prüfung auf Integrität der Daten statt. Vielmehr umfasst das Verifizieren unter Verwendung der digitalen Signatur sowohl eine Verifizierung des Senders (Authentizität) wie auch die Prüfung auf Unversehrtheit der Datenpakete (Integrität).

Sodann können das erste und das zweite verifizierte elektronische Datenpaket ausgewertet werden (Schritt 123). Hierbei kann wenigstens eine der folgenden Prüfaufgaben ausgeführt werden: Prüfen, ob das erste und das zweite elektronische Datenpaket von der derselben Netzwerkkomponente empfangen wurden, nämlich der ersten Netzwerkkomponente 10.1; Prüfen, ob das erste und das zweite elektronische Datenpaket unverändert von der ersten an die zweite Netzwerkkomponente , 10.1, 10.2, übertragen wurden; und Prüfen, ob das erste und das zweite elektronische Datenpaket in der von der ersten Netzwerkkomponente 10.1 festgelegten Reihenfolge empfangen wurden, also das erste vor dem zweiten elektronischen Datenpaket.

Vergleichbar kann bei dem Verfahren vorgesehen sein, dass n-te elektronische Datenpaket auszuwerten und zu prüfen.

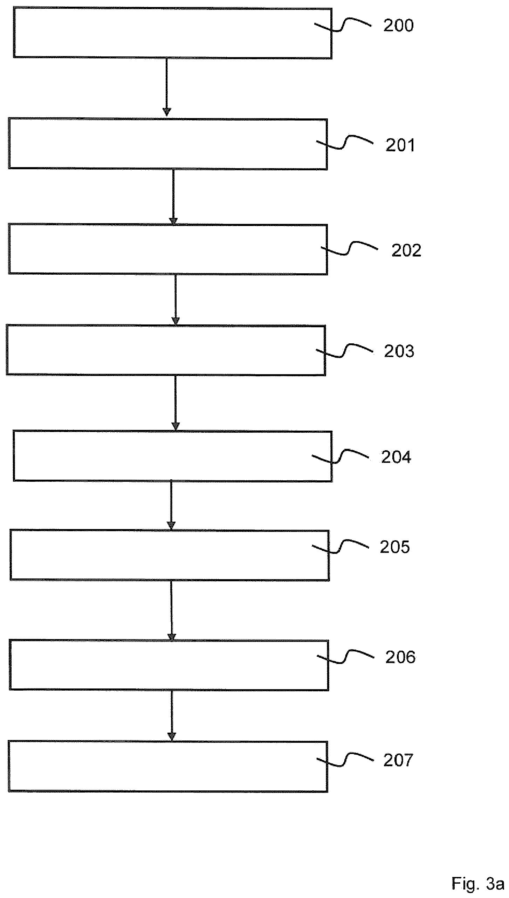

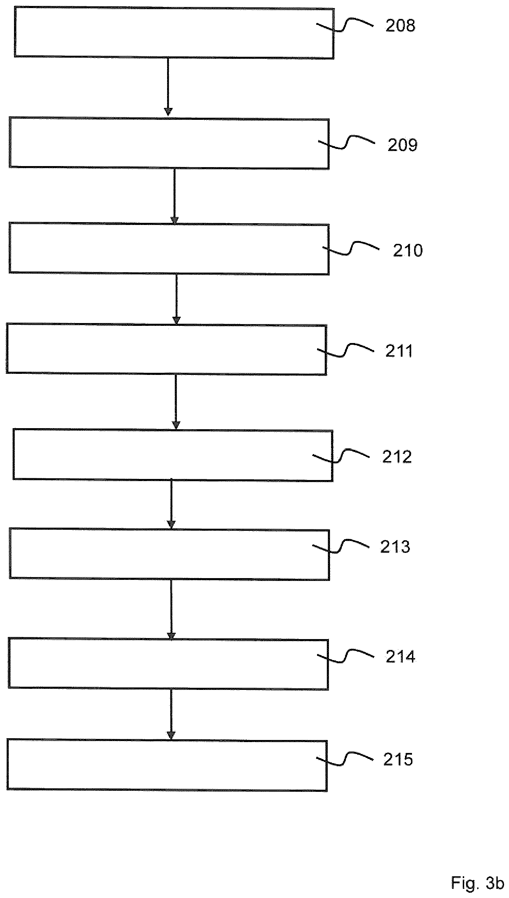

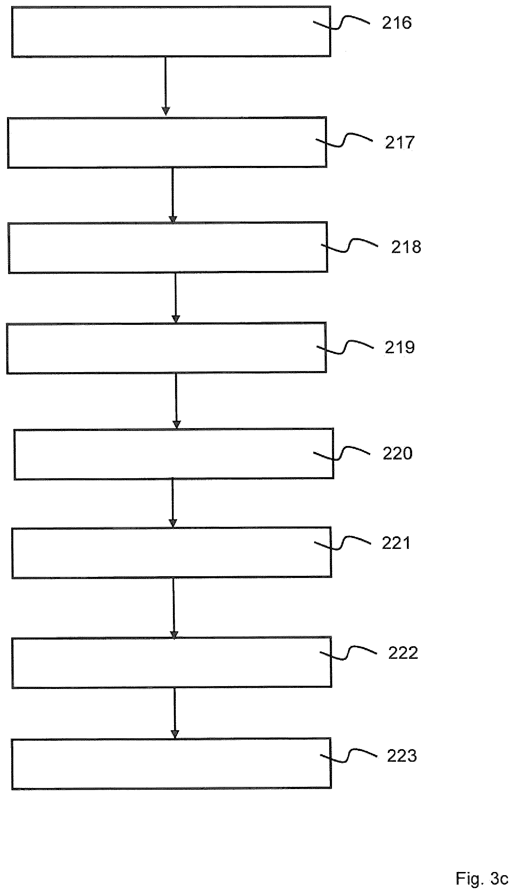

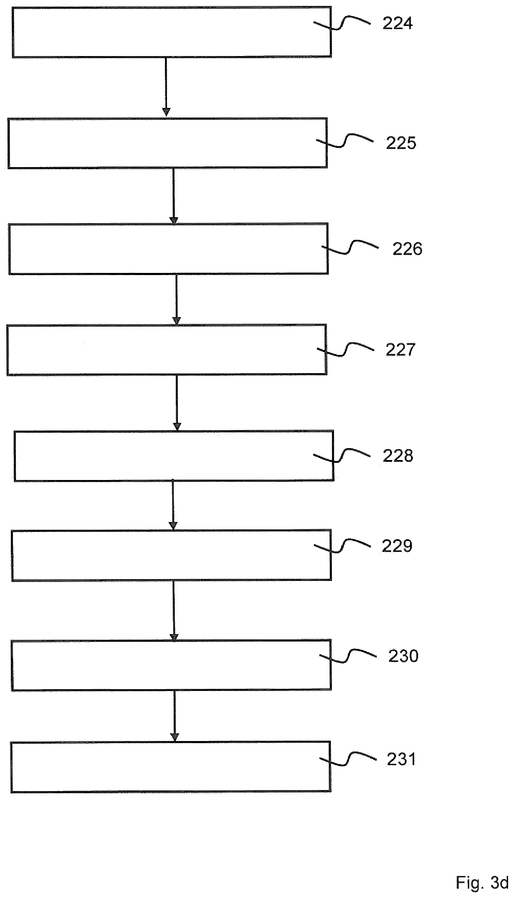

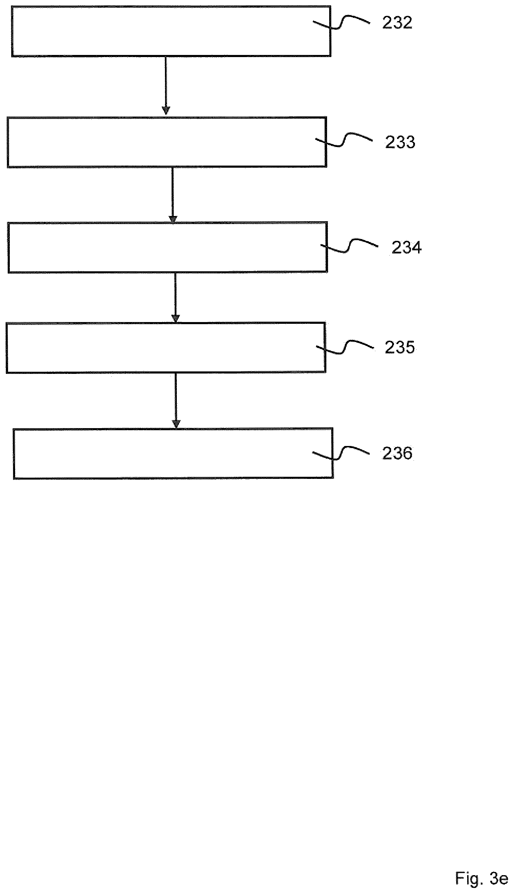

Fig. 3 zeigt eine schematische Darstellung für ein Verfahren zum abgesicherten bidirektionalen Austauschen von elektronischen Datenpaketen in dem Netzwerk. Im Schritt 200 wird ein erstes kryptographisches Schlüsselpaar zum digitalen Signieren mit einem ersten öffentlichen und einem ersten privaten Schlüssel in der ersten Netzwerkkomponente 10.1 bereitgestellt. In der zweiten Netzwerkkomponente wird im Schritt 201 ein zweites kryptographisches Schlüsselpaar zum digitalen Signieren mit einem zweiten öffentlichen und einem zweiten privaten Schlüssel bereitgestellt. In den Schritten 202 und 203 werden in der ersten und der zweiten Netzwerkkomponente 10.1, 10.2 eine erste Komponenten-ID und ein zweite Komponenten-ID bereitgestellt, die die erste und die zweite Netzwerkkomponente in dem Netzwerk eineindeutig identifizieren.

In der ersten Netzwerkkomponente 10.1 ist bei dem Verfahren Folgendes vorgesehen: Empfangen des zweiten öffentlichen Schlüssels (Schritt 204); Bereitstellen erster Anfrage-Nutzdaten, die eine erste Anfrage betreffen (Schritt 205); Erzeugen eines ersten elektronischen Anfrage-Datenpakets, welches die erste Komponenten-ID und die ersten Anfrage-Nutzdaten umfasst (Schritt 206); Erzeugen einer ersten digitalen Signatur, indem das erste elektronische Anfrage-Datenpaket mit dem ersten privaten Schlüssel digital signiert wird (Schritt 207); Senden des ersten elektronischen Anfrage-Datenpakets und der ersten digitalen Anfrage-Signatur von der ersten Netzwerkkomponente an die Netzwerkkomponente (Schritt 208); und Senden des ersten öffentlichen Schlüssels von der ersten an die zweite Netzwerkkomponente (Schritt 209).

In der zweiten Netzwerkkomponente 10.2 ist Folgendes vorgesehen: Empfangen des ersten öffentlichen Schlüssels (Schritt 210); Empfangen des ersten elektronischen Anfrage-Datenpakets und der ersten digitalen Anfrage-Signatur (Schritt 211); Speichern wenigstens der ersten digitalen Anfrage-Signatur in einer zweiten Speichereinrichtung, welche der zweiten Netzwerkkomponente zugeordnet ist (Schritt 212); Bereitstellen erster Antwort-Nutzdaten als Reaktion auf das Empfangen des ersten elektronischen Anfrage-Datenpakets, wobei die ersten Antwort-Nutzdaten eine erste Antwort auf die erste Anfrage betreffen (Schritt 213); Erzeugen eines ersten elektronischen Antwort-Datenpakets, welches die zweite Komponenten-ID, die ersten Antwort-Nutzdaten und die erste elektronische Anfrage-Signatur umfasst (Schritt 214); Erzeugen einer ersten digitalen Antwort-Signatur, indem das erste elektronische Antwort-Datenpaket mit dem zweiten privaten Schlüssel digital signiert wird (Schritt 215); und Senden des ersten elektronischen Antwort-Datenpakets und der ersten digitalen Antwort-Signatur von der zweiten Netzwerkkomponente an die erste Netzwerkkomponente (Schritt 216).

In der ersten Netzwerkkomponente 10.1 ist weiterhin Folgendes vorgesehen: Empfangen des ersten elektronischen Antwort-Datenpakets und der ersten digitalen Antwort-Signatur (Schritt 217); Speichern wenigstens der ersten digitalen Antwort-Signatur in einer ersten Speichereinrichtung, welche der ersten Netzwerkkomponente zugeordnet ist (Schritt 218); Bereitstellen zweiter Anfrage-Nutzdaten, die eine zweite Anfrage betreffen (Schritt 219); Erzeugen eines zweiten elektronischen Anfrage-Datenpakets, welches die erste Komponenten-ID, die zweiten Anfrage-Nutzdaten und die erste digitale Antwort-Signatur umfasst (Schritt 220); Erzeugen einer zweiten digitalen Signatur, indem das zweite elektronische Anfrage-Datenpaket mit dem ersten privaten Schlüssel digital signiert wird (Schritt 221); und Senden des zweiten elektronischen Anfrage-Datenpakets und der zweiten digitalen Anfrage-Signatur von der ersten Netzwerkkomponente an die zweite Netzwerkkomponente (Schritt 222).

Beim Verfahren zum abgesicherten bidirektionalen Austauschen von elektronischen Datenpaketen kann in der zweiten Netzwerkkomponente weiterhin Folgendes vorgesehen sein: Empfangen des zweiten elektronischen Anfrage-Datenpakets und der zweiten digitalen Anfrage-Signatur (Schritt 223); Speichern wenigstens der zweiten digitalen Anfrage-Signatur in der zweiten Speichereinrichtung (Schritt 224); Bereitstellen zweiter Antwort-Nutzdaten als Reaktion auf das Empfangen des zweiten elektronischen Anfrage-Datenpakets, wobei die zweiten Antwort-Nutzdaten eine zweite Antwort auf die zweite Anfrage betreffen (Schritt 225); Erzeugen eines zweiten elektronischen Antwort-Datenpakets, welches die zweite Komponenten-ID, die zweiten Antwort-Nutzdaten und die zweite elektronische Anfrage-Signatur umfasst (Schritt 226); Erzeugen einer zweiten digitalen Antwort-Signatur, indem das zweite elektronische Antwort-Datenpaket mit dem zweiten privaten Schlüssel digital signiert wird (Schritt 227); Senden des zweiten elektronischen Antwort-Datenpakets und der zweiten digitalen Antwort-Signatur von der zweiten Netzwerkkomponente an die erste Netzwerkkomponente (Schritt 228).

In der ersten Netzwerkkomponente 10.1 werden das zweite elektronische Antwort-Datenpaket und die zweite digitale Antwort-Signatur empfangen (Schritt 229), und wenigstens die zweite digitale Antwort-Signatur in der ersten Speichereinrichtung gespeichert (Schritt 230).

In Ergänzung kann bei dem Verfahren zum bidirektionalen Austauschen von Datenpaketen in der zweiten Netzwerkkomponente Folgendes vorgesehen sein: Bereitstellen weiterer Antwort-Nutzdaten, die eine weitere Antwort auf die erste Anfrage anzeigen (Schritt 231); Erzeugen eines weiteren elektronischen Antwort-Datenpakets, welches die zweite Komponenten-ID, die weiteren Antwort-Nutzdaten und die erste elektronische Antwort-Signatur umfasst (Schritt 232); Erzeugen einer weiteren digitalen Antwort-Signatur, indem das weitere elektronische Antwort-Datenpaket mit dem zweiten privaten Schlüssel digital signiert wird (Schritt 233); Senden des weiteren elektronischen Antwort-Datenpakets und der weiteren digitalen Antwort-Signatur von der zweiten Netzwerkkomponente an die erste Netzwerkkomponente (Schritt 234).

In der ersten Netzwerkkomponente 10.1 werden das weitere elektronische Antwort-Datenpaket und die weitere digitale Antwort-Signatur empfangen (Schritt 235) und wenigstens die weitere digitale Antwort-Signatur gespeichert (Schritt 236).

Das Verifizieren der elektronischen Datenpakete mittels öffentlichem Schlüssel auf der jeweiligen Empfängerseite kann dann wie oben beschrieben ausgeführt werden, wobei eine oder mehrere der erläuterten Prüfaufgaben ausgeführt werden kann.

Bei den Verfahren wird Vertrauensverhältnis zwischen der sendenden Netzwerkkomponente (Erzeuger, zum Beispiel Sensoreinrichtung) von Datenpaketen und allen tatsächlichen und potentiellen empfangenden Netzwerkkomponenten (Empfängern) hergestellt. Hierfür wird auf dem Erzeuger ein asymmetrisches Schlüsselpaar bereitgestellt (klassische asymmetrische Kryptographie) und allen Empfängern im Netzwerk der öffentliche Schlüssel mitgeteilt oder auf eine Weise bereitgestellt, dass diese Empfänger einen effizienten und sicheren Zugang dazu haben. Umgekehrt generiert für die Herstellung der Vertrauenswürdigkeit von ggf. nötigen Antworten (Bestätigungen o.ä.) des Empfängers auch dieser ein Schlüsselpaar und stellt wiederum den öffentlichen Teil dem Datenerzeuger (sendende Netzwerkkomponente) zur Verfügung. Geeignete Maßnahmen zur Prüfung des Besitzes des privaten Schlüssels werden vorausgesetzt (zum Beispiel Diffie-Hellmann basierter Schlüssel-Austausch).

Damit Empfänger der Datenpakete sicherstellen können, dass diese vom Erzeuger der Datenpakete stammen, werden alle Datenpakete vom Erzeuger mit dessen privaten Schlüssel signiert und die resultierende Signatur wird auf dem kompletten Verarbeitungs- oder Übertragungsweg als "Paket" mit dem Datenpaket zusammengehalten. Diese Signatur kann vom Empfänger mittels des vorher erhaltenen öffentlichen Schlüssels des Erzeugers überprüft werden (eine Erstellung von Signaturen ist mit dem öffentlichen Schlüssel nicht möglich). Damit werden zwei wichtige Probleme gelöst: (i) Die Integrität der Datenpakete wird sichergestellt, da eine Manipulation von Datenpakete oder Signatur zu einem Fehler bei der Prüfung führen würde; und (ii) die Authentizität der Datenpakete (ursprünglich von der sendenden Netzwerkkomponente produziert) wird sichergestellt.

Damit ist eine Manipulation über die gesamte Datenübertragung ausgeschlossen (bzw. einfach durch Prüfung der Signatur feststellbar) und der Ursprung der Datenpakete sichergestellt (nur dieser Sender ist im Besitz des für Generierung dieser Signatur nötigen privaten Schlüssels). Solange beide Parteien (Erzeuger und Empfänger, d.h. sendende und empfangende Netzwerkkomponente) den Austausch und die Prüfung der jeweiligen Schlüssel vorher abgeschlossen haben, führt auch die Übertragung über ungesicherte, nicht vertrauenswürdige oder nicht-authentifizierte Datenwege, nicht zu einer Einschränkung der Vertrauenswürdigkeit der Daten.

Die einmalige Versiegelung der Daten durch den Sender stellt die Vertrauenswürdigkeit über alle weiteren tatsächlichen und potentiellen Verarbeitungsschritte sicher.

Im Folgenden werden Ausführungen in Verbindung mit der Sicherung der Integrität, Authentizität und Reihenfolge in der Datenübertragung erläutert. Hierbei werden folgende Bezeichnungen verkürzend verwendet: S - Sender (sendende Netzwerkkomponente); E - Empfänger (sendende Netzwerkkomponente); sig[n,X] - n-te Signature von X; IDₓ - Identifikationsmerkmal des Gerätes x; Nutzdaten n - "Nutzlast" das n-ten Datenpakets (Nutzdaten werden nachfolgend auch als "Payload" bezeichnet).

Voraussetzung ist, dass der Sender S ein Schlüsselpaar aus geheimen Schlüssel und öffentlichen Schlüssel generiert hat. Der Sender hat im Netzwerk eine eineindeutige ID_{S} generiert oder bei Herstellung erhalten; Empfänger E hat vor Empfang des ersten Datenpakets Zugang zum öffentlichen Schlüssel des Sender S bekommen. Verfahren für den sicheren Austausch der öffentlichen Schlüssel von Schlüsselpaaren im Kontext asymmetrischer Kryptographie sind als solche in verschiedenen Ausführungen bekannt.

Der Sender möchte mehrere Datenpakete (mehr als eins) an den Empfänger übertragen und diese Daten (Payload 1 Payload 2 etc.) liegen bereit. Dann kann das Verfahren zum Übertragen der mehreren Datenpakete schematisch wie folgt dargestellt werde:
1) Initial (Datenpaket 1 von S --> E): [ID_{S}, 0, Payload 1]^{sig[1,S]}
2) Folge 1 (Datenpaket 2 von S --> E): [ID_{S}, sig[1,S], Payload 2]^{sig[2,S]}
n) Folge n (Datenpaket n+1): [ID_{S}, sig[n,S], Payload n]^{sig[n+1,S]}

Die Übernahme der Signatur des vorherigen Datenpakets sowie die Signatur an jedem einzelnen Datenpaket, ermöglicht dem Empfänger sicherzustellen, dass (i) alle Pakete vom gleichen Sender (S) stammen; (ii) alle Pakete unverändert übertragen wurden und (iii) alle Pakete in der vom Sender initiierten Reihenfolge empfangen wurden.

E speichert für jeden Sender stets die letzte Signatur sig[n,S] speichern.

Die Authentizität ist dann gegeben, wenn durch eine vorangegangene Prüfung der öffentlichen Schlüssel beide Partner, also von Sender und Empfänger, dem jeweils anderen Partner vertrauen. Es ist dann unerheblich, welcher Partner bei der Übertragung als Sender und Empfänger auftritt. Die Datenübertragung kann in beide Richtungen mit den gegebenen Absicherungen stattfinden.

Bei dieser Art der Datenübertragung ist außerdem unerheblich, durch wie viele Empfänger, das Datum empfangen und weitergeleitet wurde. Die Vertrauenswürdigkeit der Daten kann an jedem Punkt der Übertragung oder in Verarbeitungsschritten geprüft werden.

Im Folgenden wird ein Anwendungsfall einer bidirektionalen Absicherung der Übertragung von Datenpaketen in dem Netzwerk erläutert.

Es sollen die folgenden Voraussetzungen gelten:
a. Sender S und Empfänger E haben jeweils ein Schlüsselpaar aus geheimen Schlüssel und öffentlichen Schlüssel generiert. Sender S und Empfänger E haben jeweils eine eineindeutige ID generiert oder bei der Herstellung erhalten (Hardware ID).
b. Empfänger E hat vor Empfang des ersten Datenpakets Zugang zum öffentlichen Schlüssel des Sender S bekommen. Sender S hat vor Empfang des ersten Datenpakets Zugang zum öffentlichen Schlüssel des Empfängers E bekommen. Verfahren für den sicheren Austausch der öffentlichen Schlüssel von Schlüsselpaaren im Kontext asymmetrischer Kryptographie sind als solche in verschiedenen Ausführungen bekannt.
c. Programmcode auf dem Sender möchte mehrere Datenpakete (mehr als eins) an den Empfänger übertragen und diese Daten (Payload1 Payload2 etc.) liegen bereit.

In einem Fall A wird ein einfacher Request-Reply Zyklus (Anfrage-Antwort Zyklus) ohne Kontinuität angenommen. Es ergibt sich Folgendes:
1. Initial (Datenpaket 1)
   S->E [IDS, 0, REQUEST 1]sig[1,S]
   S<-E [IDE, sig[1,S], REPLY 1]sig[1,E]
   S<-E [IDE, sig[1,E], REPLY 1a]sig[2,E] (Option)
2. Folge 1 (Datenpaket 2)
   S->E [ID, sig[1,S], REQUEST2]sig[2,S]
   S<-E [IDE, sig[2,S], REPLY2]sig[2,E]
n. Folge n (Datenpaket n+1)
   S->E [ID, sig[n,S], REQUESTn]sig[n+1,S]
   S<-E [IDE, sig[n+1,S], REPLYn]sig[n+1,E]

Fall A gibt, zusätzlich zu Prozess 1, die Zusicherung an den Sender, dass die Antwort auf einen Request wirklich nur auf diesen Request gemacht wurde. Nach Erhalt des korrekten REPLY wird kein weiterer REPLY auf diesen Request mehr akzeptiert. Wenn ein REQUEST mehrfache REPLYs auslöst, müssen diese wiederum miteinander verkettet werden.

Der Empfänger E speichert zu jedem Sender stets die letzte Signatur sig[n,S].

In einem Fall B ist eine ollständige Absicherung einer bidirektionalen Datenkommunikation vorgesehen. Es ergibt sich Folgendes:
1. Initial (Datenpaket 1)
   S->E [IDS, 0, REQUEST 1]sig[1,S]
   S<-E [IDE, sig[1,S], REPLY 1]sig[1,E]
2. Folge 1 (Datenpaket 2)
   S->E [ID, sig[1,E], REQUEST2]sig[2,S]
   S<-E [IDE, sig[2,S], REPLY2]sig[2,E]
n. Folge n (Datenpaket n+1)
   S->E [ID, sig[n,E], REQUEST n]sig[n+1,S]
   S<-E [IDE, sig[n+1,S], REPLY n]sig[n+1,E]

Fall B sichert eine REQUEST / REPLY Abfolge mit absoluter Vertrauenswürdigkeit der Reihenfolge in beiden Richtungen. Der Empfänger E muss zu jedem Sender stets die letzte Signatur sig[n,S] speichern.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungen von Bedeutung sein.

## Patentansprüche

1. Verfahren zum abgesicherten Übertragen von elektronischen Datenpaketen in einem Netzwerk, mit:
- Bereitstellen von Netzwerkkomponenten, die jeweils einen Prozessor für eine elektronische Datenverarbeitung aufweisen und eingerichtet sind, in einem Netzwerk über Datenkommunikationsverbindungen zwischen den Netzwerkkomponenten elektronische Datenpakete zu senden und / oder zu empfangen;
- in einer ersten der Netzwerkkomponenten,
- im Rahmen eines ersten Datenverarbeitungsvorgangs,
- Bereitstellen eines ersten kryptographischen Schlüsselpaares zum digitalen Signieren mit einem ersten öffentlichen und einem ersten privaten Schlüssel;
- Bereitstellen einer ersten Komponenten-ID, die die erste Netzwerkkomponente in dem Netzwerk eineindeutig identifiziert;
- Bereitstellen erster Nutzdaten;
- Erzeugen eines ersten elektronischen Datenpakets, welches die erste Komponenten-ID und die ersten Nutzdaten umfasst;
- Erzeugen einer ersten digitalen Signatur, indem das erste elektronische Datenpaket mit dem ersten privaten Schlüssel digital signiert wird;
- Senden des ersten elektronischen Datenpakets und der ersten digitalen Signatur von der ersten Netzwerkkomponente an eine zweite der Netzwerkkomponenten; und
- Senden des ersten öffentlichen Schlüssels von der ersten an die zweite Netzwerkkomponente; und
- im Rahmen eines zweiten Datenverarbeitungsvorgangs,
- Bereitstellen zweiter Nutzdaten, die von den ersten Nutzdaten verschieden sind;
- Erzeugen eines zweiten elektronischen Datenpakets, welches die erste Komponenten-ID, die zweiten Nutzdaten und die erste digitalen Signatur umfasst;
- Erzeugen einer zweiten digitalen Signatur, indem das zweite elektronische Datenpaket mit dem ersten privaten Schlüssel digital signiert wird; und
- Senden des zweiten elektronischen Datenpakets und der zweiten digitalen Signatur von der ersten Netzwerkkomponente an die zweite Netzwerkkomponente; und
- in der zweiten Netzwerkkomponente,
- Empfangen des ersten elektronischen Datenpakets und der ersten digitalen Signatur sowie des zweiten elektronischen Datenpakets und der zweiten digitalen Signatur;
- Speichern des ersten elektronischen Datenpakets und der ersten digitalen Signatur sowie des zweiten elektronischen Datenpakets und der zweiten digitalen Signatur in einer Speichereinrichtung, die der zweiten Netzwerkkomponente zugeordnet ist;
- Empfangen des ersten öffentlichen Schlüssels; und
- Speichern des ersten öffentlichen Schlüssels in der Speichereinrichtung;
wobei weiterhin Folgendes vorgesehen ist:
- in der ersten Netzwerkkomponente, im Rahmen eines n-ten (n>2) Datenverarbeitungsvorgangs,
- Bereitstellen n-ter Nutzdaten, die zumindest von den ersten und den zweiten Nutzdaten verschieden sind;
- Erzeugen eines n-ten elektronischen Datenpakets, welches die erste Komponenten-ID, die n-ten Nutzdaten und eine (n-1)-te digitale Signatur umfasst, welche unter Verwendung des ersten privaten Schlüssels für ein (n-1)-tes Datenpakt mit (n-1)-ten Nutzdaten, der ersten Komponenten-ID und einer (n-2)-ten digitalen Signatur erzeugt wurde;
- Erzeugen einer n-ten digitalen Signatur, indem das n-te elektronische Datenpaket mit dem ersten privaten Schlüssel digital signiert wird; und
- Senden des n-ten elektronischen Datenpakets und der n-ten digitalen Signatur von der ersten Netzwerkkomponente an die zweite Netzwerkkomponente; und
- in der zweiten Netzwerkkomponente,
- Empfangen des n-ten elektronischen Datenpakets und der n-ten digitalen Signatur und
- Speichern des n-ten elektronischen Datenpakets und der n-ten digitalen Signatur in der Speichereinrichtung.

2. Verfahren nach Anspruch 1, wobei in der zweiten Netzwerkkomponente weiterhin Folgendes vorgesehen ist:
- Verifizieren des ersten elektronischen Datenpakets mittels des ersten öffentlichen Schlüssels;
- Verifizieren des zweiten elektronischen Datenpakets mittels des ersten öffentlichen Schlüssels; und
- Auswerten des ersten und des zweiten verifizierten elektronischen Datenpakets, wobei hierbei wenigstens eine der folgenden Prüfaufgaben ausgeführt wird:
- Prüfen, ob das erste und das zweite elektronische Datenpaket von der derselben Netzwerkkomponente empfangen wurden, nämlich der ersten Netzwerkkomponente;
- Prüfen, ob das erste und das zweite elektronische Datenpaket unverändert von der ersten an die zweite Netzwerkkomponente übertragen wurden; und
- Prüfen, ob das erste und das zweite elektronische Datenpaket in der von der ersten Netzwerkkomponente festgelegten Reihenfolge empfangen wurden, also das erste vor dem zweiten elektronischen Datenpaket.

3. Verfahren nach Anspruch 1 und 2, wobei in der zweiten Netzwerkkomponente weiterhin Folgendes vorgesehen ist:
- Verifizieren des n-ten elektronischen Datenpakets mittels des ersten öffentlichen Schlüssels;
- Auswerten des n-ten verifizierten elektronischen Datenpakets, wobei hierbei wenigstens eine der folgenden Prüfaufgaben ausgeführt wird:
- Prüfen, ob das n-te elektronische Datenpaket von der ersten Netzwerkkomponente empfangen wurde;
- Prüfen, ob das n-te elektronische Datenpaket unverändert von der ersten an die zweite Netzwerkkomponente übertragen wurde; und
- Prüfen, ob das n-te elektronische Datenpaket in der von der ersten Netzwerkkomponente festgelegten Reihenfolge empfangen wurde, also das (n-1)-te vor dem n-ten elektronischen Datenpaket.

4. Verfahren zum abgesicherten bidirektionalen Austauschen von elektronischen Datenpaketen in einem Netzwerk, mit:
- Bereitstellen von Netzwerkkomponenten, die jeweils einen Prozessor für eine elektronische Datenverarbeitung aufweisen und eingerichtet sind, in einem Netzwerk über Datenkommunikationsverbindungen zwischen den Netzwerkkomponenten elektronische Datenpakete zu senden und / oder zu empfangen;
- Bereitstellen eines ersten kryptographischen Schlüsselpaares zum digitalen Signieren mit einem ersten öffentlichen und einem ersten privaten Schlüssel in einer ersten der Netzwerkkomponenten;
- Bereitstellen eines zweiten kryptographischen Schlüsselpaares zum digitalen Signieren mit einem zweiten öffentlichen und einem zweiten privaten Schlüssel zum digitalen Signieren in einer zweiten der Netzwerkkomponenten;
- Bereitstellen einer ersten Komponenten-ID, die die erste Netzwerkkomponente in dem Netzwerk eineindeutig identifiziert;
- Bereitstellen einer zweiten Komponenten-ID, die die zweite Netzwerkkomponente in dem Netzwerk eineindeutig identifiziert;
- in der ersten Netzwerkkomponente,
- Empfangen des zweiten öffentlichen Schlüssels;
- Bereitstellen erster Anfrage-Nutzdaten, die eine erste Anfrage betreffen;
- Erzeugen eines ersten elektronischen Anfrage-Datenpakets, welches die erste Komponenten-ID und die ersten Anfrage-Nutzdaten umfasst;
- Erzeugen einer ersten digitalen Signatur, indem das erste elektronische Anfrage-Datenpaket mit dem ersten privaten Schlüssel digital signiert wird;
- Senden des ersten elektronischen Anfrage-Datenpakets und der ersten digitalen Anfrage-Signatur von der ersten Netzwerkkomponente an die Netzwerkkomponente; und
- Senden des ersten öffentlichen Schlüssels von der ersten an die zweite Netzwerckomponente;
- in der zweiten Netzwerkkomponente,
- Empfangen des ersten öffentlichen Schlüssels;
- Empfangen des ersten elektronischen Anfrage-Datenpakets und der ersten digitalen Anfrage-Signatur;
- Speichern wenigstens der ersten digitalen Anfrage-Signatur in einer zweiten Speichereinrichtung, welche der zweiten Netzwerkkomponente zugeordnet ist;
- Bereitstellen erster Antwort-Nutzdaten als Reaktion auf das Empfangen des ersten elektronischen Anfrage-Datenpakets, wobei die ersten Antwort-Nutzdaten eine erste Antwort auf die erste Anfrage betreffen;
- Erzeugen eines ersten elektronischen Antwort-Datenpakets, welches die zweite Komponenten-ID, die ersten Antwort-Nutzdaten und die erste elektronische Anfrage-Signatur umfasst;
- Erzeugen einer ersten digitalen Antwort-Signatur, indem das erste elektronische Antwort-Datenpaket mit dem zweiten privaten Schlüssel digital signiert wird; und
- Senden des ersten elektronischen Antwort-Datenpakets und der ersten digitalen Antwort-Signatur von der zweiten Netzwerkkomponente an die erste Netzwerkkomponente; und
- in der ersten Netzwerkkomponente,
- Empfangen des ersten elektronischen Antwort-Datenpakets und der ersten digitalen Antwort-Signatur;
- Speichern wenigstens der ersten digitalen Antwort-Signatur in einer ersten Speichereinrichtung, welche der ersten Netzwerkkomponente zugeordnet ist;
- Bereitstellen zweiter Anfrage-Nutzdaten, die eine zweite Anfrage betreffen;
- Erzeugen eines zweiten elektronischen Anfrage-Datenpakets, welches die erste Komponenten-ID, die zweiten Anfrage-Nutzdaten und die erste digitale Antwort-Signatur umfasst;
- Erzeugen einer zweiten digitalen Signatur, indem das zweite elektronische Anfrage-Datenpaket mit dem ersten privaten Schlüssel digital signiert wird; und
- Senden des zweiten elektronischen Anfrage-Datenpakets und der zweiten digitalen Anfrage-Signatur von der ersten Netzwerkkomponente an die zweite Netzwerkkomponente.

5. Verfahren nach Anspruch 4, weiterhin aufweisend:
- in der zweiten Netzwerkkomponente,
- Empfangen des zweiten elektronischen Anfrage-Datenpakets und der zweiten digitalen Anfrage-Signatur;
- Speichern wenigstens der zweiten digitalen Anfrage-Signatur in der zweiten Speichereinrichtung;
- Bereitstellen zweiter Antwort-Nutzdaten als Reaktion auf das Empfangen des zweiten elektronischen Anfrage-Datenpakets, wobei die zweiten Antwort-Nutzdaten eine zweite Antwort auf die zweite Anfrage betreffen;
- Erzeugen eines zweiten elektronischen Antwort-Datenpakets, welches die zweite Komponenten-ID, die zweiten Antwort-Nutzdaten und die zweite elektronische Anfrage-Signatur umfasst;
- Erzeugen einer zweiten digitalen Antwort-Signatur, indem das zweite elektronische Antwort-Datenpaket mit dem zweiten privaten Schlüssel digital signiert wird;
- Senden des zweiten elektronischen Antwort-Datenpakets und der zweiten digitalen Antwort-Signatur von der zweiten Netzwerkkomponente an die erste Netzwerkkomponente; und
- in der ersten Netzwerkkomponente,
- Empfangen des zweiten elektronischen Antwort-Datenpakets und der zweiten digitalen Antwort-Signatur; und
- Speichern wenigstens der zweiten digitalen Antwort-Signatur in der ersten Speichereinrichtung.

6. Verfahren nach Anspruch 4 oder 5, weiterhin aufweisend:
- in der zweiten Netzwerkkomponente,
- Bereitstellen weiterer Antwort-Nutzdaten, die eine weitere Antwort auf die erst Anfrage anzeigen;
- Erzeugen eines weiteren elektronischen Antwort-Datenpakets, welches die zweite Komponenten-ID, die weiteren Antwort-Nutzdaten und die erste elektronische Antwort-Signatur umfasst;
- Erzeugen einer weiteren digitalen Antwort-Signatur, indem das weitere elektronische Antwort-Datenpaket mit dem zweiten privaten Schlüssel digital signiert wird;
- Senden des weiteren elektronischen Antwort-Datenpakets und der weiteren digitalen Antwort-Signatur von der zweiten Netzwerkkomponente an die erste Netzwerkkomponente; und
- in der ersten Netzwerkkomponente,
- Empfangen des weiteren elektronischen Antwort-Datenpakets und der weiteren digitalen Antwort-Signatur; und
- Speichern wenigstens der weiteren digitalen Antwort-Signatur in der ersten Speichereinrichtung.

7. Verfahren nach Anspruch 5 und 6, wobei das weitere elektronische Antwort-Datenpaket und die weitere digitalen Antwort-Signatur in der zweiten Netzwerkkomponente erzeugt und an die erste Netzwerkkomponente übertragen werden bevor in der zweiten Netzwerckomponente das zweite elektronische Antwort-Datenpaket und die zweite digitale Antwort-Signatur erzeugt werden.

## Claims

1. A method for the secured transmission of electronic data packets in a network, having:
- providing network components, which in each case have a processor for electronic data processing and are set up to send and/or to receive electronic data packets between the network components in a network via data communication connections;
- in a first of the network components,
- in the context of a first data processing operation,
- providing a first cryptographic key pair for digitally signing with a first public and a first private key;
- providing a first component ID, which biuniquely identifies the first network component in the network;
- providing a first payload;
- creating a first electronic data packet, which comprises the first component ID and the first payload;
- creating a first digital signature, in that the first electronic data packet is digitally signed using the first private key;
- sending the first electronic data packet and the first digital signature from the first network component to a second of the network components; and
- sending the first public key from the first to the second network component; and
- in the context of a second data processing operation,
- providing a second payload, which is different from the first payload;
- creating a second electronic data packet, which comprises the first component ID, the second payload and the first digital signature;
- creating a second digital signature, in that the second electronic data packet is digitally signed using the first private key; and
- sending the second electronic data packet and the second digital signature from the first network component to the second network component; and
- in the second network component,
- receiving the first electronic data packet and the first digital signature, and the second electronic data packet and the second digital signature;
- saving the first electronic data packet and the first digital signature, and the second electronic data packet and the second digital signature on a storage device, which is assigned to the second network component;
- receiving the first public key; and
- saving the first public key on the storage device;
wherein the following is furthermore provided:
- in the first network component, in the context of an nth (n>2) data processing operation,
- providing an nth payload, which is at least different from the first and the second payloads;
- creating an nth electronic data packet, which comprises the first component ID, the nth payload and an (n-1)th digital signature, which was created using the first private key for an (n-1)th data packet with an (n-1)th payload, the first component ID and an (n-2)th digital signature;
- creating an nth digital signature, in that the nth electronic data packet is digitally signed using the first private key; and
- sending the nth electronic data packet and the nth digital signature from the first network component to the second network component; and
- in the second network component,
- receiving the nth electronic data packet and the nth digital signature, and
- saving the nth electronic data packet and the nth digital signature on the storage device.

2. The method according to claim 1, wherein the following is furthermore provided in the second network component:
- verifying the first electronic data packet by means of the first public key;
- verifying the second electronic data packet by means of the first public key; and
- analysing the first and the second verified electronic data packet, wherein at least one of the following checking tasks is executed here:
- checking whether the first and the second electronic data packets were received from the same network component, namely the first network component;
- checking whether the first and the second electronic data packets were transmitted unaltered from the first to the second network component; and
- checking whether the first and the second electronic data packets were received in the order specified by the first network component, that is to say the first before the second electronic data packet.

3. The method according to claims 1 and 2, wherein the following is furthermore provided in the second network component:
- verifying the nth electronic data packet by means of the first public key;
- analysing the nth verified electronic data packet, wherein at least one of the following checking tasks is executed here:
- checking whether the nth electronic data packet was received from the first network component;
- checking whether the nth electronic data packet was transmitted unaltered from the first to the second network component; and
- checking whether the nth electronic data packet was received in the order specified by the first network component, that is to say the (n-1)th before the nth electronic data packet.

4. A method for the secured bidirectional exchange of electronic data packets in a network, having:
- providing network components, which in each case have a processor for electronic data processing and are set up to send and/or to receive electronic data packets between the network components in a network via data communication connections;
- providing a first cryptographic key pair for digitally signing with a first public and a first private key, in a first of the network components;
- providing a second cryptographic key pair for digitally signing with a second public and a second private key, for digitally signing in a second of the network components;
- providing a first component ID, which biuniquely identifies the first network component in the network;
- providing a second component ID, which biuniquely identifies the second network component in the network;
- in the first network component,
- receiving the second public key;
- providing a first request payload, which relates to a first request;
- creating a first electronic request data packet, which comprises the first component ID and the first request payload;
- creating a first digital signature, in that the first electronic request data packet is digitally signed using the first private key;
- sending the first electronic request data packet and the first digital request signature from the first network component to the network component; and
- sending the first public key from the first to the second network component;
- in the second network component,
- receiving the first public key;
- receiving the first electronic request data packet and the first digital request signature;
- saving at least the first digital request signature in a second storage device, which is assigned to the second network component;
- providing a first response payload as a reaction to the receipt of the first electronic request data packet, wherein the first response payload relates to a first response to the first request;
- creating a first electronic response data packet, which comprises the second component ID, the first response payload and the first electronic request signature;
- creating a first digital response signature, in that the first electronic response data packet is digitally signed using the second private key; and
- sending the first electronic response data packet and the first digital response signature from the second network component to the first network component; and
- in the first network component,
- receiving the first electronic response data packet and the first digital response signature;
- saving at least the first digital response signature in a first storage device, which is assigned to the first network component;
- providing a second request payload, which relates to a second request;
- creating a second electronic request data packet, which comprises the first component ID, the second request payload and the first digital response signature;
- creating a second digital signature, in that the second electronic request data packet is digitally signed using the first private key; and
- sending the second electronic request data packet and the second digital request signature from the first network component to the second network component.

5. The method according to claim 4, furthermore having:
- in the second network component,
- receiving the second electronic request data packet and the second digital request signature;
- saving at least the second digital request signature in the second storage device;
- providing a second response payload as a reaction to the receipt of the second electronic request data packet, wherein the second response payload relates to a second response to the second request;
- creating a second electronic response data packet, which comprises the second component ID, the second response payload and the second electronic request signature;
- creating a second digital response signature, in that the second electronic response data packet is digitally signed using the second private key;
- sending the second electronic response data packet and the second digital response signature from the second network component to the first network component; and
- in the first network component,
- receiving the second electronic response data packet and the second digital response signature, and
- saving at least the second digital response signature in the first storage device.

6. The method according to claim 4 or 5, furthermore having:
- in the second network component,
- providing a further response payload, which indicates a further response to the first request;
- creating a further electronic response data packet, which comprises the second component ID, the further response payload and the first electronic response signature;
- creating a further digital response signature, in that the further electronic response data packet is digitally signed using the second private key;
- sending the further electronic response data packet and the further digital response signature from the second network component to the first network component; and
- in the first network component,
- receiving the further electronic response data packet and the further digital response signature; and
- saving at least the further digital response signature in the first storage device.

7. The method according to claims 5 and 6, wherein the further electronic response data packet and the further digital response signature are created in the second network component and transmitted to the first network component, before the second electronic response data packet and the second digital response signature are created in the second network component.

## Revendications

1. Procédé de transmission sécurisée de paquets de données électroniques dans un réseau, comportant :
- la fourniture de composants de réseau, qui présentent respectivement un processeur pour le traitement électronique des données et sont conçus pour envoyer et/ou recevoir, dans un réseau via des liaisons de communication de données entre les composants du réseau électronique, des paquets de données ;
- dans un premier des composants de réseau,
- dans le cadre d'un premier processus de traitement de données,
- la fourniture d'une première paire de clés cryptographiques pour la signature numérique avec une première clé publique et une première clé privée ;
- la fourniture d'un premier ID de composant qui identifie de manière unique les premiers composants de réseau dans le réseau ;
- la fourniture de premières données utiles ;
- la génération d'un premier paquet de données électroniques comprenant le premier ID de composant et les premières données utiles ;
- la génération d'une première signature numérique en signant numériquement le premier paquet de données électroniques avec la première clé privée ;
- l'envoi du premier paquet de données électroniques et de la première signature numérique du premier composant de réseau à un deuxième des composants de réseau ; et
- l'envoi de la première clé publique du premier au deuxième composant de réseau ; et
- dans le cadre d'un deuxième traitement de données,
- la fourniture des deuxièmes données utiles qui sont différentes des premières données utiles ;
- la génération d'un deuxième paquet de données électroniques, qui comprend le premier identifiant de composant, les deuxièmes données utiles et la première signature numérique ;
- la génération d'une deuxième signature numérique en signant numériquement le deuxième paquet de données électroniques avec la première clé privée ; et
- l'envoi du deuxième paquet de données électroniques et la deuxième signature numérique du premier composant de réseau au deuxième composant de réseau ; et
- dans les deuxièmes composants de réseau,
- la réception du premier paquet de données électroniques et de la première signature numérique ainsi que du deuxième paquet de données électroniques et de la deuxième signature numérique ;
- la mémorisation du premier paquet de données électroniques et de la première signature numérique ainsi que du deuxième paquet de données électroniques et de la deuxième signature numérique dans un dispositif de mémorisation qui est affecté au deuxième composant de réseau ;
- la réception de la première clé publique ; et
- la mémorisation de la première clé publique dans le dispositif de mémorisation ;
dans lequel il est également prévu ce qui suit :
- dans les premiers composants de réseau, dans le cadre d'un n-ième (n> 2) processus de traitement de données,
- la fourniture des n-ièmes données utiles qui sont au moins différentes des première et deuxième données utiles ;
- la génération d'un n-ième paquet de données électroniques, qui comprend le premier identifiant de composant, les n-ièmes données utiles et une (n1)-ième signature numérique, qui ont été générés en utilisant la première clé privée pour un (n1)-ième paquet de données avec (nl)-ièmes données utiles, le premier ID de composant et une (n-2)ième signature numérique;
- la génération d'une n-ième signature numérique en signant numériquement le nième paquet de données électroniques avec la première clé privée ; et
- l'envoi du n-ième paquet de données électroniques et de la n-ième signature numérique du premier composant de réseau au deuxième composant de réseau ; et
- dans les deuxièmes composants de réseau,
- la réception du n-ième paquet de données électroniques et de la nième signature numérique et
- la mémorisation du n-ième paquet de données électroniques et de la n-ième signature numérique dans le dispositif de mémorisation.

2. Procédé selon la revendication 1, dans lequel dans les deuxièmes composants de réseau, il est également prévu :
- la vérification du premier paquet de données électroniques à l'aide de la première clé publique;
- la vérification du deuxième paquet de données électroniques à l'aide de la première clé publique; et
- l'évaluation du premier et du deuxième paquet de données électroniques vérifiées, avec au moins une des tâches de test suivantes en cours :
- la vérification si les premier et deuxième paquets de données électroniques ont été reçus à partir des mêmes composants de réseau, à savoir les premiers composants de réseau ;
- la vérification si le premier et le deuxième paquet de données électroniques ont été transmis sans modification du premier au deuxième composant de réseau ; et
- la vérification si le premier et le deuxième paquet de données électroniques se trouvent dans la séquence spécifiée reçue à partir des premiers composants de réseau, à savoir le premier avant le deuxième paquet de données électroniques.

3. Procédé selon les revendications 1 et 2, dans lequel il est en outre prévu ce qui suit dans les deuxièmes composants de réseau:
- la vérification du n-ième paquet de données électroniques à l'aide de la première clé publique;
- l'évaluation du n-ième paquet de données électroniques vérifié, avec au moins une des tâches de test suivantes en cours :
- la vérification si le n-ième paquet de données électroniques a été reçu par les premiers composants de réseau ;
- la vérification si le n-ième paquet de données électroniques a été transmis sans changement du premier au deuxième composant de réseau ; et
- la vérification si le n-ième paquet de données électroniques a été reçu dans la séquence spécifiée par les premiers composants de réseau, c'est-à-dire le (n-I)-ième avant le n-ième paquet de données électroniques.

4. Procédé d'échange bidirectionnel sécurisé de paquets de données électroniques dans un réseau, comportant :
- la fourniture de composants de réseau, qui présentent respectivement un processeur pour le traitement électronique des données et sont conçus pour envoyer et/ou recevoir, dans un réseau via des liaisons de communication de données entre les composants du réseau électronique, des paquets de données ;
- la fourniture d'une première paire de clés cryptographiques pour la signature numérique avec une première clé publique et une première clé privée dans un premier des composants de réseau ;
- la fourniture d'une deuxième paire de clés cryptographiques pour la signature numérique avec une deuxième clé publique et une deuxième clé privée pour la signature numérique dans un deuxième des composants de réseau ;
- la fourniture d'un premier ID de composant qui identifie les premiers composants de réseau dans le réseau identifié de manière unique ;
- la fourniture d'un deuxième ID de composant dans lequel se trouvent les deuxièmes composants de réseau identifié de manière unique dans le réseau ;
- dans les premiers composants de réseau,
- la réception de la deuxième clé publique ;
- la fourniture de premières données utiles de demande, qui se rapportent à une première demande ;
- la génération d'un premier paquet de données de demande électronique, qui comprend le premier ID de composant et les premières données utiles de demande;
- la génération d'une première signature numérique en signant numériquement le premier paquet de données de demande électronique avec la première clé privée ;
- l'envoi du premier paquet de données de demande électronique et de la première signature de demande numérique du premier composant de réseau au composant de réseau ; et
- l'envoi de la première clé publique du premier au deuxième composant de réseau ;
- dans les deuxièmes composants de réseau,
- la réception de la première clé publique ;
- la réception du premier paquet de données de demande électronique et de la première signature de demande numérique;
- la mémorisation d'au moins la première signature de demande numérique dans un deuxième dispositif de mémorisation qui est affecté au deuxième composant de réseau ;
- la fourniture de premières données utiles de réponse en réaction à la réception des premiers paquets de données de demande électronique, dans lequel les premières données utiles se rapportent à une première réponse à la première demande ;
- la génération d'un premier paquet de données de réponse électronique qui comprend le deuxième identifiant de composant, les premières données utiles de réponse et la première signature de demande électronique ;
- la génération d'une première signature de réponse numérique en signant numériquement le premier paquet de données de réponse électronique avec la deuxième clé privée ; et
- l'envoi du premier paquet de données de réponse électronique et de la première signature de réponse numérique du deuxième composant de réseau au premier composant de réseau ; et
- dans les premiers composants de réseau,
- la réception du premier paquet de données de réponse électronique et de la première signature de réponse numérique ;
- la mémorisation d'au moins la première signature de réponse numérique dans un premier dispositif de mémorisation qui est affecté au premier composant de réseau ;
- la fourniture de données utiles de deuxième demande, qui se rapportent à une deuxième demande ;
- la génération d'un deuxième paquet de données de demande électronique, qui comprend le premier ID de composant, les deuxièmes données utiles de demande et la première signature de réponse numérique ;
- la génération d'une deuxième signature numérique en signant numériquement le deuxième paquet de données de demande électronique avec la première clé privée ; et
- l'envoi du deuxième paquet de données de demande électronique et de la deuxième signature de demande numérique du premier composant de réseau au deuxième composant de réseau.

5. Procédé selon la revendication 4, comprenant en outre.
- dans les deuxièmes composants de réseau,
- la réception du deuxième paquet de données de demande électronique et de la deuxième signature de demande numérique ;
- la mémorisation d'au moins la deuxième signature de demande numérique dans le deuxième dispositif de mémorisation ;
- la fourniture des deuxièmes données utiles de réponse en réaction à la réception du deuxième paquet de données de demande électronique, dans lequel les deuxièmes données utiles de réponse se rapportent à une deuxième réponse à la deuxième demande
- la génération d'un deuxième paquet de données de réponse électronique qui comprend le deuxième identifiant de composant, les deuxièmes données utiles de réponse et la deuxième signature de demande électronique ;
- la génération d'une deuxième signature de réponse numérique en signant numériquement le paquet de données de réponse avec la deuxième clé privée ;
- l'envoi du deuxième paquet de données de réponse électronique et de la deuxième signature de réponse numérique du deuxième composant de réseau au premier composant de réseau ; et
- dans les premiers composants de réseau,
- la réception du deuxième paquet de données de réponse électronique et de la deuxième signature de réponse numérique; et
- la mémorisation d'au moins la deuxième signature de réponse numérique dans le premier dispositif de mémorisation.

6. Procédé selon la revendication 4 ou 5, comprenant en outre :
- dans les deuxièmes composants de réseau,
- la fourniture d'autres données utiles de réponse qui indiquent une autre réponse à la première demande ;
- la génération d'un autre paquet de données de réponse électronique qui comprend le deuxième identifiant de composant, les autres données utiles de réponse et la première signature de réponse électronique ;
- la génération d'une autre signature de réponse numérique en signant numériquement l'autre paquet de données de réponse électronique avec la deuxième clé privée ;
- l'envoi de l'autre paquet de données de réponse électronique et l'autre signature de réponse numérique du deuxième composant de réseau au premier composant de réseau ; et
- dans les premiers composants de réseau,
- la réception de l'autre paquet de données de réponse électronique et de l'autre signature de réponse numérique ; et
- la mémorisation d'au moins la signature de réponse numérique supplémentaire dans le premier dispositif de mémorisation.

7. Procédé selon la revendication 5 et 6, dans lequel l'autre paquet de données de réponse électronique et l'autre signature de réponse numérique sont générés dans les deuxièmes composants de réseau et transmis aux premiers composants de réseau avant que le deuxième paquet de données de réponse électronique et la deuxième signature de réponse soient générés dans les deuxièmes composants de réseau.
